# EUROPÄISCHE PATENTANMELDUNG

(11) **EP 3 156 370 A1**
(43) Veröffentlichungstag der Anmeldung: **19.04.2017**
(21) Anmeldenummer: 15002949.4
(22) Anmeldetag: 16.10.2015
(51) Int. Cl.: C01G 23/02, C01G 33/00, C01G 49/10, C22B 7/00, C22B 34/12, C22B 34/24

(54) **VERFAHREN ZUR ABTRENNUNG VON WERTHALTIGEN METALLCHLORIDEN AUS RÜCKSTÄNDEN DER TITANDIOXIDHERSTELLUNG (CHLORIDVERFAHREN)**

(71) Anmelder: Kronos International, Inc., 51373 Leverkusen (DE)
(72) Erfinder: Medved, Mitja, 51375 Leverkusen (DE); Pierau, Thomas, 51371 Leverkusen (DE)

(57) **Zusammenfassung**

Die Erfindung betrifft ein Verfahren zur Abtrennung von werthaltigen Metallchloriden, insbesondere Titantetrachlorid und Niobpentachlorid, aus festen Rückständen, die bei der Chlorierung von Eisen-Titan-haltigen Rohstoffen im Rahmen der Titandioxidherstellung (Chloridverfahren) anfallen und beruht auf dem Prinzip der Verdampfung bzw. Sublimierung und der Resublimierung der Metallchloride.

Die festen Rückstände werden zunächst erhitzt und die anhaftenden werthaltigen Metallchloride verdampft bzw. sublimiert. Hierbei können Temperatur und Druck bzw. Partialdruck so eingestellt werden, dass eine weitgehend selektive Verdampfung der werthaltigen Metallchloride erfolgt. Anschließend werden die verdampften/sublimierten Metallchloride mit einem trockenen und chemisch inerten Trägergas zu einer Kühlvorrichtung transportiert und auf den gekühlten Oberflächen durch Resublimation abgeschieden. Die Abscheidung kann vorzugsweise ebenfalls selektiv erfolgen und orientiert sich dann beispielsweise an den Dampfdruckkurven der reinen Stoffe.

## Beschreibung

### Gebiet der Erfindung

Die Erfindung betrifft ein Verfahren zur Abtrennung von werthaltigen Metallchloriden, insbesondere Titantetrachlorid und Niobpentachlorid, aus festen Rückständen, die bei der Chlorierung von Eisen-Titan-haltigen Rohstoffen im Rahmen der Titandioxidherstellung (Chloridverfahren) anfallen.

### Technologischer Hintergrund der Erfindung

Bei der Titandioxidherstellung nach dem Chloridverfahren werden Eisen- und Titan-haltige Rohstoffe in einem Chlorierungsreaktor hauptsächlich zu Titantetrachlorid und Eisen(II)chlorid umgesetzt. Aus dem den Reaktor verlassenden Titantetrachlorid-haltigen Gas wird das Eisen(II)chlorid zusammen mit anderen, z.T. werthaltigen Metallchloriden sowie wasserunlöslichen Feststoffen in einem nachgeschalteten Zyklon als "Zyklonstaub" abgeschieden.

Die abgeschiedenen Feinpartikel (Zyklonstaub) werden üblicherweise zusammen mit den anhaftenden Wertstoffen aus dem System entfernt. Aufgrund der Beschaffenheit des Zyklonstaub gelangt darüber hinaus auch ein erheblicher Teil des TiCl₄-haltigen Gases zusammen mit dem Staub in den Staubproduktstrom und in die nachgeschalteten Apparate. Diese TiCl₄-Mengen sind damit für den eigentlichen Produktionsprozess verloren.

Der Zyklonstaub besteht aus Koks, unreagiertem Eisen-Titan-haltigen Rohstoff und Metallchloriden und wird üblicherweise mit verdünnter Salzsäure zu einer Suspension angeteigt, in der die Metallchloride unter Hydrolyse zu den entsprechenden Salzen reagieren. Aus der Suspension lässt sich in der Regel - je nach Zusammensetzung der eingesetzten Rohstoffe - nach Abtrennung der Feststoffe eine verkaufsfähige Eisenchloridlösung mit etwa 20 Gew.-% Eisenchlorid herstellen, die eine Reihe weiterer, z.T. werthaltiger Metallchloride enthält. Ein besonders werthaltiges Metallchlorid ist hierbei Niobpentachlorid.

Der aus der Suspension abgetrennte Feststoff (Koks und unreagierter Rohstoff) wird einer weiteren Verwendung zugeführt. Hierbei wird das Material üblicherweise entweder thermisch genutzt oder insgesamt verwendet.

Vor dem Hintergrund der derzeitigen weltweiten Rohstofflage und dem allgemeinen Bedürfnis, Rohstoffressourcen zu schonen, besteht ein Interesse, die in den festen Rückständen (Zyklonstaub) der Titandioxidherstellung nach dem Chloridverfahren vorhandenen Metallchloride, insbesondere Titantetrachlorid und Niobpentachlorid zurückzugewinnen.

Die bisherigen Arbeiten zur Gewinnung von Niob und anderen Wertstoffen, beispielsweise Vanadium, aus den Nebenproduktströmen des Chloridverfahrens betrafen zum einen die Extraktion der Wertstoffe aus der gebildeten Suspension bzw. aus der Eisenchloridlösung durch Einsatz von beispielsweise Komplexbildnern und Lösemitteln und zum anderen das Ausfällen der Wertstoffe durch den Einsatz besonderer Fällungschemikalien wie z.B. Phosphatverbindungen (siehe beispielsweise DE 10 2011 106864 B4, DE 10 2011 106 750 A1).

### Aufgabenstellung und Kurzbeschreibung der Erfindung

Aufgabe der Erfindung ist es, ein weiteres Verfahren anzugeben, mit Hilfe dessen werthaltige Metalle selektiv aus den festen Reststoffen, die bei der Titandioxidherstellung nach dem Chloridprozess anfallen, rückgewonnen werden können.

Die Aufgabe wird gelöst durch ein Verfahren zum Rückgewinnen von werthaltigen Metallchloriden aus trockenem Metallchlorid-haltigen Staub, der bei der Carbochlorierung von Eisen-Titan-haltigen Rohstoffen anfällt, umfassend folgende Schritte:
a) Erhitzen des Staubs, um die werthaltigen Metallchloride zu verdampfen bzw. zu sublimieren, so dass ein Gasstrom, der die werthaltigen Metallchloride enthält, und eine Metallchlorid-abgereicherte Staubfraktion entstehen,
b) Resublimation der in dem Gasstrom enthaltenen werthaltigen Metallchloride,

Weitere vorteilhafte Verfahrensvarianten sind in den Unteransprüchen beschrieben.

### Figuren

Figur 1: Schematische Darstellung einer Ausführung des erfindungsgemäßen Verfahrens.
Figur 2: Schematische Darstellung einer bevorzugten Ausführung des erfindungsgemäßen Verfahrens.

### Beschreibung der Erfindung

Alle im Folgenden offenbarten Angaben bezüglich Temperatur, pH-Wert, Konzentration etc. sind so zu verstehen, dass alle Werte, die im Bereich der dem Fachmann bekannten jeweiligen Messgenauigkeit liegen, mit umfasst sind.

Das erfindungsgemäße Verfahren geht von den Metallchlorid-haltigen festen Reststoffen aus, die bei der Carbochlorierung im Rahmen des Chloridverfahrens zur Titandioxidherstellung anfallen. Bei diesen Reststoffen handelt es sich um die direkt hinter dem Chlorierungsreaktor mittels Zyklon als "Zyklonstaub" aus dem Gasstrom abgetrennten trockenen Feststoffe.
Bei der Carbochlorierung wird der Eisen-Titan-haltige Rohstoff in einem Wirbelbett in Anwesenheit von Petrolkoks und Chlor zu gasförmigen Metallchloriden umgesetzt. Die Hauptprodukte sind TiCl₄, FeCl₂, AlCl₃, MnCl₂, MgCl₂, VOCl₃, VOCl₂, SiCl₄, ZrC4, NbCl₅, CrCl₃ und WCl₆. Ein Teil der Rohstoffe reagiert aber nicht vollständig und wird als Feinfraktion (Zyklonstaub) zusammen mit den gasförmigen Chloriden aus dem Reaktor ausgetragen. Der Gasstrom wird direkt nach dem Verlassen des Reaktors abgekühlt und mit einer Temperatur von etwa 165°C durch einen Staubzyklon geführt, wobei ein Großteil der Feinpartikel abgetrennt wird. Aufgrund der im Zyklon herrschenden Temperaturverhältnisse sowie der Porosität und der hohen spezifischen Oberfläche der Feinpartikel haften Metallchloride, darunter insbesondere TiCl₄, NbCl₅, FeCl₂, VOCl₂ und VOCl₃ an den Feinpartikeln. Ein Teil der Metallchloride liegt hier kondensiert vor, wobei die Mechanismen der Anhaftung insbesondere auf temperaturabhängiger Kapillarkondensation bzw. Oberflächenkondensation beruhen.

Das erfindungsgemäße Verfahren erlaubtes, die werthaltigen Metallchloride, insbesondere TiCl₄ und NbCl₅ direkt aus dem Staubstrom nach dem Zyklon zurückzugewinnen. An dieser Stelle des Verfahrens ist die Wertstoffkonzentration relativ hoch und das Material wasserfrei. Das erfindungsgemäße Verfahren beruht auf dem Prinzip der Verdampfung bzw. Sublimierung und der Resublimierung der Metallchloride. In Schritt 1 wird der Zyklonstaub erhitzt und die anhaftenden werthaltigen Metallchloride verdampft bzw. sublimiert. Hierbei kann die Temperatur so eingestellt werden, dass eine weitgehend selektive Verdampfung der werthaltigen Metallchloride erfolgt. Anschließend werden die verdampften/sublimierten Metallchloride mit einem trockenen und chemisch inerten Trägergas zu einer Kühlvorrichtung transportiert und in Schritt 2 auf gekühlten Oberflächen durch Resublimation abgeschieden. Die Abscheidung kann vorzugsweise ebenfalls selektiv erfolgen und orientiert sich dann beispielsweise an den Siedepunkten der reinen Stoffe unter Normaldruck, wie z.B. VOCl₃ - 126°C, TiCl₄ - 136°C, NbCl₅ - 248 °C, VOCl₂ - 380°C, FeCl₂ - 1025°C, oder an deren Dampfdruckkurven.

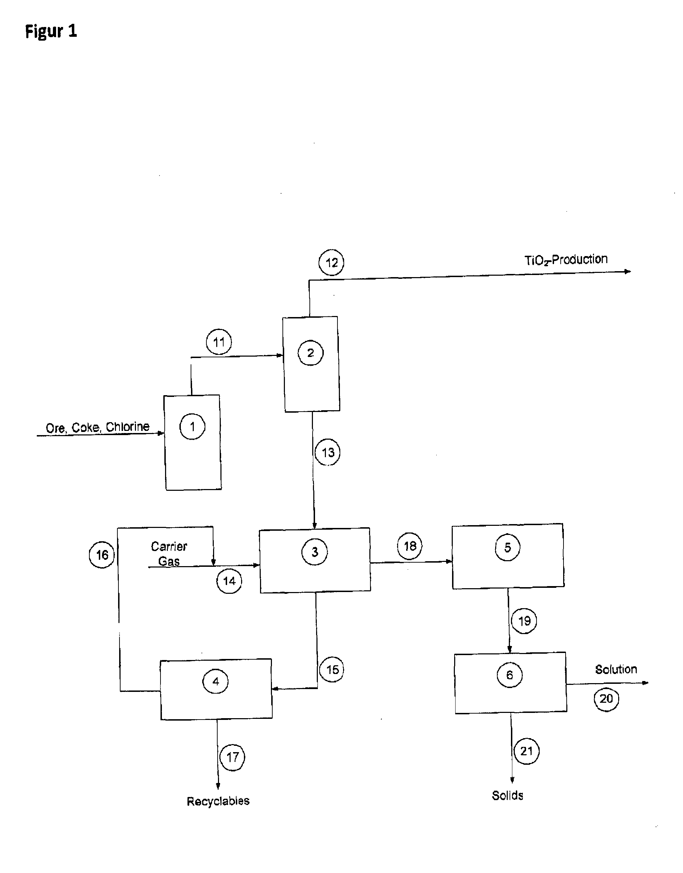

In Figur 1 ist eine Ausführung des erfindungsgemäßen Verfahrens schematisch dargestellt. Der bei der Reaktion von Eisen-Titan-haltigem Rohstoff, Chlorgas und Koks im Chlorierungsreaktor (1) erzeugte Gasstrom (11) wird wie bekannt durch den Staubzyklon (2) geleitet. Der abgetrennte TiCl₄-haltige Gasstrom (12) wird den weiteren Verfahrensschritten zur Titandioxidherstellurg zugeführt.
In Schritt 1 des erfindungsgemäßen Verfahrens wird der im Zyklon (2) abgetrennte Feststoff (13, Zyklonstaub), der auch die anhaftenden werthaltigen Metallchloride enthält, einer beheizbaren Mischvorrichtung (3) zugeführt, in der die Metallchloride unter Zuführung eines Trägergases (14) gezielt verdampft bzw. sublimiert werden. In Schritt 2 des erfindungsgemäßen Verfahrens wird der Metallchlorid-haltige Trägergasstrom (15) einer Kühleinrichtung (4) zugeführt, wo eine gesteuerte Resublimation stattfindet. Die erzeugten festen Metallchloride werden abgetrennt und der weiteren Verwendung zugeführt (17). Das nach dem Resublimationsschritt verbliebene Trägergas (16) wird vorzugsweise in die beheizbare Mischvorrichtung (3) zurückgeführt.

Der nach der Verdampfung/Sublimation der Metallchloride verbliebene Feststoff (18) wird wie in den bekannten Verfahren mit wässriger Salzsäure zu einer Suspension angeteigt und gleichzeitig hydrolysiert (5). Die hydrolysierte Suspension (19) wird anschließend einer festflüssig Trennung (6) zugeführt, bei der eine verkaufsfähige Eisenchlorid-haltige Lösung (20) und ein inerter Feststoff (21) erhalten werden.

Erfindungsgemäß sind als beheizbare Mischvorrichtung (3) (im Folgenden: Mischvorrichtung) die dem Fachmann bekannten Apparaturen geeignet, insbesondere heizbare Pflugscharmischer oder Doppelschneckenmischer. Die Mischvorrichtung wird idealerweise von einem Trägergas (14) durchströmt, vorzugsweise von getrocknetem Stickstoff oder einem TiCl₄-haltigen Gasstrom, um die verdampfenden/sublimierenden Metallchloride aus der Staubmatrix auszutragen und aus der Mischvorrichtung zu leiten. Die in der Mischvorrichtung eingestellten Temperatur- bzw. Partialdruckverhältnisse sind hierbei so zu wählen, dass die abzutrennenden Metallchloride stets in der Dampfphase vorliegen.
In einer besonderen Ausführung können auch mehrere Mischvorrichtungen zum Einsatz kommen, welche sowohl hintereinander wie auch parallel verschaltet werden können und in denen jeweils eine höhere Temperatur eingestellt wird, um die Metallchloride getrennt bzw. fraktioniert verdampfen/sublimieren zu können.

Der bei der Verdampfung/Sublimierung entstandene Gasstrom (15) wird in eine Kühlvorrichtung (4), die vorzugsweise eine Kühlschnecke, ein Dünnschichtkristallisator oder eine Resublimationskammer ist, geführt. Die Kühleinrichtung wird mit einem Kühlmedium betrieben, beispielsweise mit Heizdampf oder Thermalölen. Dem Fachmann sind derartige Stoffe bekannt.
Der Gasstrom wird abgekühlt, und die Metallchloride scheiden sich nach ihren stoffspezifisch unterschiedlichen Kondensations- und Sublimationspunkten bei den jeweilig herrschenden lokalen Druckverhältnissen aus dem Gasstrom als Feststoffe ab. Die Feststoffe bestehen vorzugsweise aus den reinen, vorzugsweise wasserfreien Metallchloriden und werden aus der Kühlvorrichtung abgezogen (17). Sie können entweder direkt weiterverwertet werden oder alternativ in einem nachfolgenden Schritt durch wässrige Hydrolyse in die energetisch niedrigwertige Oxidform überführt werden. Die Oxidform kann anschließend als Lösung, Suspension oder nach einem geeigneten Trocknungsschritt als Feststoff weiterverwertet werden.
Der die Kühlvorrichtung (4) verlassende Trägergasstrom (16) wird bevorzugt zurück in die Mischvorrichtung (3) geführt.

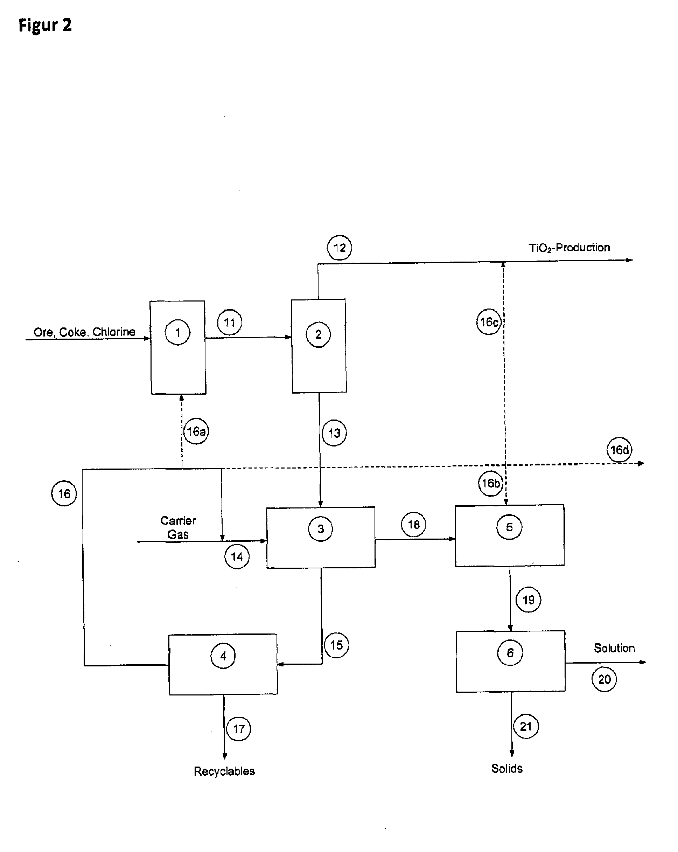

Darüber hinaus gibt es weitere Möglichkeiten zur Verwendung des Trägergases (16). Diese sind in Figur 2 schematisch dargestellt.
Enthält das Trägergas TiCl₄, wird die Temperatur in der Kühlvorrichtung (4) vorzugsweise auf eine Temperatur oberhalb der Kondensationstemperatur von TiCl₄ eingestellt, so dass das TiCl₄ möglichst vollständig in gasförmiger Form im Trägergasstrom (16) gehalten wird.
Das TiCl₄-haltige Trägergas (16) kann alternativ mit dem Strom (16a) in den Chlorierungsreaktor (1) oder mit dem Strom (16b) in die Anteige (5), die die nach der Verdampfung/Sublimierung der Metallchloride verbliebenen Feststoffe (18) enthält, geführt werden. In einer weiteren Ausführung kann der TiCl₄-haltige Trägergasstrom auch als Strom (16c) in den aus dem Staubzyklon (2) austretenden Gasstrom (12) geleitet werden. Schließlich kann der Trägergasstrom (16) über den Strom (16d) auch direkt einer Entsorgung zugeführt werden.

Mit Hilfe des erfindungsgemäßen Verfahrens können aus dem Zyklonstaub werthaltige Metallchloride wie beispielsweise Niobpentachlorid einfach abgetrennt werden und als fester Stoff in der Resublimationsappartur (Kühlvorrichtung) rückgewonnen werden. Das im Zyklonstaub vorhandene Titantetrachlorid kann durch Steuerung der Temperatur in der Resublimationsapparatur (Kühleinrichtung) gasförmig als Strom (16a) beispielsweise in den Chlorierungsreaktor rückgeführt werden.

Zur Durchführung des erfindungsgemäßen Verfahrens sind im Gegensatz zu bekannten Verfahren, die sich mit der Rückgewinnung von Wertstoffen aus dem Zyklonstaub befassen, keine weiteren Chemikalien oder Hilfsstoffe erforderlich. Desweiteren sind lediglich konstruktiv einfache Apparaturen mit anspruchsloser Regelung in Form einer Temperatur- und Druckregelung erforderlich.

### Beispiel

Im Folgenden ist die Erfindung beispielhaft beschrieben, ohne dass damit eine Einschränkung der Erfindung verbunden ist.

Üblicherweise besteht der Zyklonstaub zu etwa 30% aus Koks, zu 30 % aus unreagiertem Erz und zu 40 % aus Metallchloriden. Die Metallchloridfraktion besteht hauptsächlich aus FeCl₂ und anderen schwersiedenden Chloriden, die in dem Zyklon nicht abgetrennt wurden. Die an dem Zyklonstaub adsorbierten Konzentrationen an Niobpentachlorid und Titantetrachlorid liegen üblicherweise jeweils bei etwa 1 Gew.-%. Sie unterliegen jedoch den natürlichen Schwankungen in den Eisen-Titan-Rohstoffen.
Zur Rückgewinnung von Niobpentachlorid aus kommerziell anfallendem Zyklonstaub nach der Carbochlorierung von Eisen-Titan-Rohstoffen wurde der Zyklonstaub kontinuierlich mit einer Dosiergeschwindigkeit von 3,7 kg/h in eine Mischvorrichtung (3) geleitet. In der Mischvorrichtung wurde eine Temperatur von 300°C und ein Betriebsunterdruck von 500 mbar über eine Pumpe eingestellt, so dass das Niobpentachlorid sublimiert und das Titantetrachlorid verdampft. Die Trägergasmenge (Stickstoff), die in die Mischvorrichtung (3) eingeleitet wurde, wurde auf 0,2 kg/h eingestellt.
Der mit NbCl₅ und TiCl₄ beladene Gasstrom wurde in eine Kühlschnecke (4) geleitet und bei Umgebungsdruck von ca. 1 bar auf eine Temperatur von 80°C heruntergekühlt, wobei NbCl₅ vorwiegend als Feststoff anfiel und TiCl₄ vorwiegend im Gasstrom verblieb. Die Rückgewinnungsausbeute von NbCl₅, bezogen auf die durch Zyklonstaub eingetragene Menge, betrug mehr als 65%, die Rückgewinnungsausbeute von TiCl₄, ebenfalls bezogen auf die durch Zyklonstaub insgesamt eingetragene Menge betrug mehr als 80%. Der TiCl₄-haltige Trägergasstrom wurde teilweise in den Chlorierungsreaktor (1) und teilweise in die Mischvorrichtung (3) rückgeführt.
In einer alternativen Ausführung wurde bei gleicher Trägergasmenge sowie bei gleicher Dosiergeschwindigkeit der Zyklonstaub in der Mischvorrichtung bei 400 mbar auf 330°C erhitzt und die daraus gebildete Gasphase in der Kühlstrecke (4) ebenfalls bei 80°C abgekühlt. In diesem Fall konnte eine Rückgewinnungsausbeute von NbCl₅, bezogen auf die durch Zyklonstaub insgesamt eingetragene Menge, von mehr als 80% erzielt werden. Die Rückgewinnungsausbeute von TiCl₄, ebenfalls bezogen auf die durch Zyklonstaub insgesamt eingetragene Menge, konnte bei mehr als 80% gehalten werden.
In einer weiteren Ausführung wurde bei einer Trägergasmenge von 0,05 kg/h und bei gleicher Dosiergeschwindigkeit der Zyklonstaub in der Mischvorrichtung bei 100 mbar auf 330°C erhitzt und die daraus gebildete Gasphase in der Kühlstrecke (4) bei 125°C abgekühlt. Auch in diesem Fall konnten Rückgewinnungsausbeuten von NbCl₅ sowie auch von TiCl₄, beide bezogen auf die durch Zyklonstaub insgesamt eingetragene Menge, von mehr als 80% erreicht werden.

## Patentansprüche

1. Verfahren zum Rückgewinnen von werthaltigen Metallchloriden aus trockenem Metallchlorid-haltigen Staub, der bei der Carbochlorierung von Eisen-Titan-haltigen Rohstoffen anfällt, umfassend folgende Schritte:
a) Erhitzen des Staubs, um die werthaltigen Metallchloride zu verdampfen bzw. zu sublimieren, so dass ein Gasstrom, der die werthaltigen Metallchloride enthält, und eine Metallchlorid-abgereicherte Staubfraktion entstehen,
b) Resublimation der in dem Gasstrom enthaltenen werthaltigen Metallchloride.

2. Verfahren nach Anspruch 1 **dadurch gekennzeichnet, dass**
die werthaltigen Metallchloride ausgewählt sind aus der Gruppe TiCl₄ und NbCl₅,

3. Verfahren nach Anspruch 1 oder 2 **dadurch gekennzeichnet, dass**
die werthaltigen Metallchloride in Schritt a) selektiv verdampft bzw. sublimiert werden.

4. Verfahren nach einem oder mehreren der Ansprüche 1 bis 3 **dadurch gekennzeichnet, dass**
die werthaltigen Metallchloride in Schritt a) in einer beheizbaren Mischapparatur verdampft bzw. sublimiert werden.

5. Verfahren nach Anspruch 4 **dadurch gekennzeichnet, dass**
die beheizbare Mischapparatur ein beheizbarer Pflugscharmischer oder Doppelschneckenmischer ist.

6. Verfahren nach Anspruch 1 oder 2 **dadurch gekennzeichnet, dass**
die werthaltigen Metallchloride in Schritt b) selektiv resublimiert werden.

7. Verfahren nach einem oder mehreren der Ansprüche 1, 2 und 6 **dadurch gekennzeichnet, dass**
die werthaltigen Metallchloride in Schritt b) in einer Kühlvorrichtung resublimiert werden.

8. Verfahren nach Anspruch 7 **dadurch gekennzeichnet, dass**
die Kühlvorrichtung eine Kühlschnecke, ein Dünnschichtkristallisator oder eine Resublimationskammer ist.

9. Verfahren nach einem oder mehreren der Ansprüche 1 bis 8 **dadurch gekennzeichnet, dass**
der Metallchlorid-haltige Gasstrom in Schritt a) und b) ein Trägergas enthält.

10. Verfahren nach Anspruch 9 **dadurch gekennzeichnet, dass**
das Trägergas getrockneten Stickstoff oder TiCl₄ enthält.

11. Verfahren nach Anspruch 9 oder 10 **dadurch gekennzeichnet, dass**
das Trägergas im Anschluss an Schritt b) nach Schritt a) rückgeführt wird.

12. Verfahren nach Anspruch 10 **dadurch gekennzeichnet, dass**
das TiCl₄-haltige Trägergas im Anschluss an Schritt b) zur Carbochlorierung des Eisen-Titan-haltigen Rohstoffs rückgeführt wird.

13. Verfahren nach einem oder mehreren der Ansprüche 1 bis 12 **dadurch gekennzeichnet, dass**
die Metallchlorid-abgereicherte Staubfraktion aus Schritt a) in einer wässrigen Suspension hydrolisiert und in eine Eisenchlorid-haltige Lösung und einen Feststoff getrennt wird.
